# EUROPÄISCHE PATENTSCHRIFT

(11) **EP 0 785 612 B1**
(45) Veröffentlichungstag und Bekanntmachung des Hinweises auf die Patenterteilung: **15.03.2000**
(21) Anmeldenummer: 96890196.7
(22) Anmeldetag: 18.12.1996
(51) Int. Cl.: H02K 9/197, H02K 7/116

(54) **Einrichtung zur Förderung des Getriebeöls zur Kühlung elektrischer Maschinen**
Device for pumping gearbox oil for cooling an electric machine
Dispositif pour le pompage d'huile de la boîte d'engrenages pour le refroidissement d'une machine électrique

(30) Priorität: 20.12.1995 AT 206795
(43) Veröffentlichungstag der Anmeldung: 23.07.1997
(73) Patentinhaber: ABB Daimler Benz Transportation Austria GmbH, 2351 Wiener Neudorf (AT)
(72) Erfinder: Neudorfer, Harald, Ing., 2351 Wiener Neudorf, AT (AT); Gukenbiehl, Karl,Ludwig Dipl.-Ing., 2371 Hinterbrühl, AT (AT)
(74) Vertreter: Köhler-Pavlik, Johann, Dipl.-Ing.

(56) Entgegenhaltungen:
- EP-A- 0 660 492
- DE-A- 4 132 780
- US-A- 1 691 696
- US-A- 1 779 797
- PATENT ABSTRACTS OF JAPAN vol. 010, no. 016 (E-375), 22.Januar 1986 & JP 60 176437 A (MITSUBISHI DENKI KK), 10.September 1985,

## Beschreibung

Die Erfindung betrifft eine Einrichtung zur Förderung des Getriebeöls zur Kühlung elektrischer Maschinen nach dem Oberbegriff des Patentanspruches 1 (vgl EP 0 660 492 A).

Bei bekannten Verfahren zur Kühlung von Elektromotoren werden Kühlmittel oder das Getriebeöl mit Hilfe von Pumpen in die zu kühlenden Teile des Motors befördert. Üblich sind elektrisch oder über Zahnradgetriebe durch den zu kühlenden Motor mechanisch angetriebener Pumpen. Bei elektrischen Pumpen ist ein großer Aufwand zur Abdichtung erforderlich. Bei Ausfall solcher Pumpen ist eine entsprechende Kühlung nicht mehr gewährleistet. Darüber hinaus besteht ein großer Nachteil darin, daß sowohl elektrische als auch mechanische Pumpen Verschleißteile aufweisen.

Aufgabe der vorliegenden Erfindung ist daher die Förderung des Getriebeöls zum Zwecke der Kühlung von Elektromotoren mit einem in einem Getriebekasten angeordneten Großrad ohne Verwendung zusätzlicher Pumpen zur Vermeidung zusätzlicher Fehlerquellen und Verschleißteile.

Diese Aufgabe wird erfindungsgemäß durch die Maßnahme nach dem kennzeichnenden Teil des Patentanspruches 1 gelöst.

Dabei wird das Getriebeöl aus dem Ölsumpf des Getriebekastens bei Drehung des Großrades in der Nut durch die Viskosität des Öls und die Fliehkräfte mitgenommen. In geringem Abstand zur Außenwand der Ringnut ist eine Abscheidewand des Ölabstreifers angeordnet, durch welche das in der Nut mitgenommene Öl abgestreift wird. Der Abstand ist dabei mindestens so groß, daß es bei Vibrationen der Maschine zu keiner Berührung der Abscheidewand mit der Fläche der Nut kommt, aber nahe genug, daß nur ein dünner Ölfilm zwischen den beiden Berührungsflächen besteht. In der Praxis liegt der Abstand im Bereich von 0,5 bis 1 mm. Der Ölabstreifer beinhaltet ein Auffanggefäß, in welchem das abgestreifte Öl gesammelt wird und dieses durch die schräge Anordnung über einen Kanal zu den zu kühlenden Teilen des Motors abrinnen kann. Durch diese berührungslose Abscheidung des Öls ist ein verschleißloser Betrieb gewährleistet. Neben diesem Vorteil ist durch die Verwendung des bereits vorhandenen Getriebeöls zur Kühlung auch kein zusätzliches Kühlmedium notwendig. Die durch die erfindungsgemäße Ölförderung auftretende Verlustleistung ist sehr gering und steht in keiner Relation zur Antriebsleistung des Motors. Aufgrund der Zähigkeit des Öls setzt die Förderung bereits bei sehr geringen Drehzahlen ein, bei höheren Drehzahlen erfolgt die Förderung aufgrund der höheren Fliehkräfte. Über einen gewissen Drehzahlbereich ist die geförderte Ölmenge etwa proportional zur Drehzahl. Oberhalb einer gewissen Grenzdrehzahl kann die Ölfördermenge nicht weiter erhöht werden, da der Ölabstreifer erschöpft ist und nicht mehr Öl über das Auffanggefäß und den Kanal abfließen kann. Dadurch wird ab einer bestimmten Drehzahl eine im wesentlichen konstante Fördermenge erzielt. Im Rahmen der Erfindung kann die ringförmige Nut auch auf beiden Seiten des Großrades vorgesehen sein.

Durch die Maßnahme nach Anspruch 2 wird das größtmögliche Gefälle erreicht und das weitere Abfließen des Getriebeöls zu den zu kühlenden Teilen verbessert. Andererseits ist diese Anordnung bezüglich der Drehrichtung des Motors symmetrisch und es wird für beide Drehrichtungen die gleiche Ölförderung gewährleistet. Dies ist für Motoren, wo beide Drehrichtungen ausgenützt werden, wie zum Beispiel im Falle eines Traktionsmotors, wichtig. Prinzipiell kann der Ölabstreifer aber an einer beliebigen Stelle oberhalb des Getriebeölsumpfs angeordnet sein.

Durch die Maßnahme nach Anspruch 3 wird ein gerichtetes Abfließen des Öls vom Ölabstreifer ermöglicht.

Die Maßnahmen nach Anspruch 4 dienen zur Optimierung der Ölförderung.

Durch das Merkmal nach Anspruch 5 wird das besonders bei hohen Drehzahlen des Motors im Getriebekasten auftretende Spritzöl gesammelt und an der untersten Stelle der Nut im Großrad das gesammelte Öl in die Ringnut eingebracht. Dadurch wird die geförderte Ölmenge weiter erhöht und eine für die Kühlung ausreichende Ölmenge gewährleistet.

Da im Ringkanal des Großrades Luft mitrotiert, wird durch das Merkmal nach Anspruch 5 die Aufgabe gelöst, die mitrotierende Luft abzuscheiden, damit mehr Öl befördert werden kann.

Eine zweckmäßige Ausbildung der Einrichtung ergibt sich durch das Merkmal nach Anspruch 6, welches bewirkt, daß durch ein Loch die Luft abgeführt wird; es entsteht ein Unterdruck, wodurch über ein anderes Loch mehr Öl angesaugt und somit die Förderleistung erhöht wird.

Zur Verstärkung der Schmierwirkung der Verzahnung des Großrades dient das Merkmal nach Anspruch 7. Durch die Rotation des Großrades sinkt der Spiegel des Getriebeölsumpfs auf der einen Seite stark ab, da die Verzahnung einen Teil des Öls mitnimmt und auf der anderen Seite stark an. Mit Hilfe von Löchern in den Leitbauteilen am Boden des Getriebekastens wird ein Druckausgleich ermöglicht und dadurch genügend Getriebeöl zur Schmierung der Verzahnung des Großrades bereitgestellt.

Bei den Leitbauteilen handelt es sich vorzugsweise um Leitbleche, es können die konstruktiven Ausbildungen, welche die Leitbauteile darstellen, aber gemäß dem Merkmal der Erfindung nach Anspruch 8 auch im Getriebekasten integriert sein und diese im Herstellungsprozeß (z.B. Gießvorgang) berücksichtigt und somit der Getriebekasten samt Leitbauteilen in einem Stück gefertigt werden. Dadurch wird die Herstellung der konstruktiven Maßnahmen zur Optimierung der erfindungsgemäßen Ölförderung erleichtert.

Durch ein weiteres Merkmal der Erfindung nach Anspruch 9 wird eine Förderung des Getriebeöls bei beiden Drehrichtungen des Motors, wie sie beispielsweise bei Traktionsmotoren auftreten, ermöglicht. Bei Anwendung der Erfindung auf Motoren mit nur einer Drehrichtung brauchen der Ölabstreifer und die verschiedenen Leitbauteile nicht symmetrisch ausgeführt sein.

Anhand von Zeichnungen wird ein Ausführungsbeispiel der Erfindung bei einem Traktionsmotor näher erläutert. Darin sind die konstruktiven Merkmale der Erfindung gemäß den beiden möglichen Drehrichtungen eines Traktionsmotors jeweils symmetrisch angeordnet. Es können verschiedene konstruktive Änderungen im Rahmen der Erfindung vorgenommen werden.

Es zeigen
Fig. 1 einen Querschnitt durch einen Traktionsmotor samt Getriebekasten von oben gesehen,
Fig. 2a und 2b das Großrad mit dem erfindungsgemäßen Ölabstreifer in Vorder- und Seitenansicht,
Fig. 3a und 3b den Ölabstreifer im Detail in Vorder- und Seitenansicht,
Fig. 4a und 4b die Anordnung zweier Leitbauteile in der Ansicht von oben sowie
Fig. 5a und 5b den erfindungsgemäßen Luftabscheider und weitere Leitbauteile im Detail in Seitenansicht und Schnittdarstellung von oben.

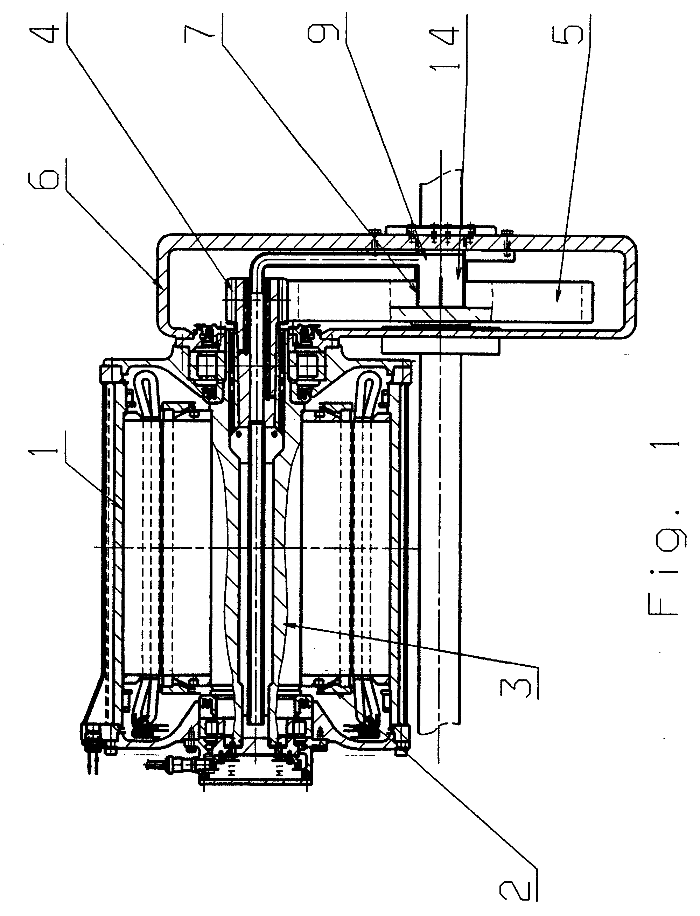

Fig. 1 zeigt den Elektromotor samt Getriebe im Schnitt von oben. Der Motor besteht aus einem feststehenden Teil, dem Ständer oder Stator 1 und einem umlaufenden Teil, dem Läufer oder Rotor 2. An der einen Seite der Rotorwelle 3 sitzt ein von dieser mitgenommenes Ritzel bzw. Kleinrad 4 welches ein Großrad 5 antreibt. Das Kleinrad 4 und das Großrad 5 sind vom Getriebekasten 6 umschlossen. Erfindungsgemäß weist das Großrad 5 an mindestens einer Seite eine ringförmige Nut 7 auf. Das Großrad taucht in den Getriebeölsumpf des Getriebekastens 6 ein, dessen Niveau höher als der tiefste Punkt der Nut 7 ist. An der obersten Stelle der Nut befindet sich ein Ölabstreifer 9, der in die Nut ragt. Vom Auffanggefäß 14 des Ölabstreifers 9 wird das Getriebeöl über eine Leitung 10 zu den zu kühlenden Teilen des Motors befördert, in diesem Ausführungsbeispiel in die hohle Rotorwelle 3 des Elektromotors.

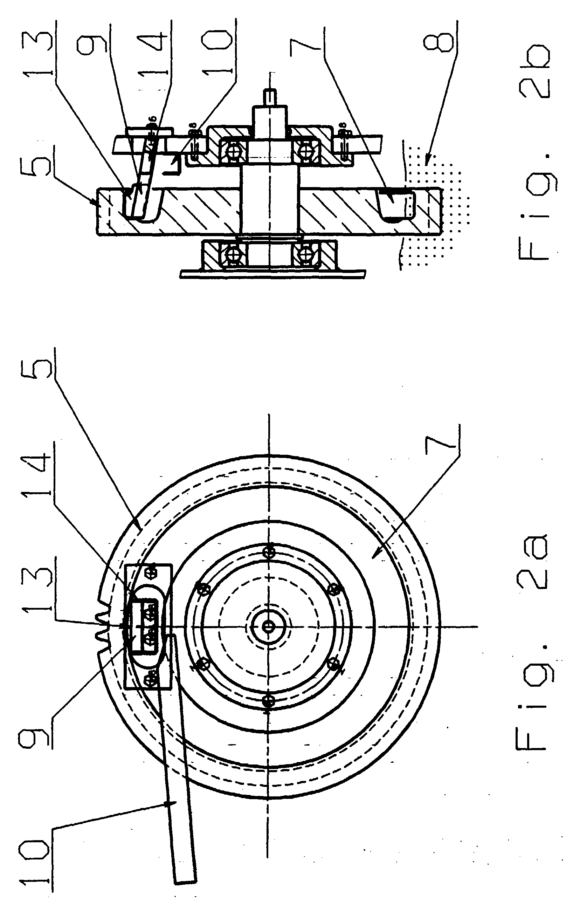

Fig. 2a und 2b zeigen das Großrad 5 mit dem Ölabstreifer 9 im Detail. Die Nut 7 im Großrad ist ringförmig angeordnet. Der tiefste Punkt der ringförmigen Nut 7 liegt unter dem Niveau des Ölsumpfs 8. An der obersten Stelle der Nut 7 ist der Ölabstreifer 9 angeordnet und ragt in diese hinein. Das Auffanggefäß 14 des Ölabstreifers 9 ist vom Großrad 5 weg schräg zur Horizontalen abfallend angeordnet, um ein Abfließen des Getriebeöls zu ermöglichen. Eine Leitung 10 leitet das Getriebeöl zu den zu kühlenden Teile des Elektromotors.

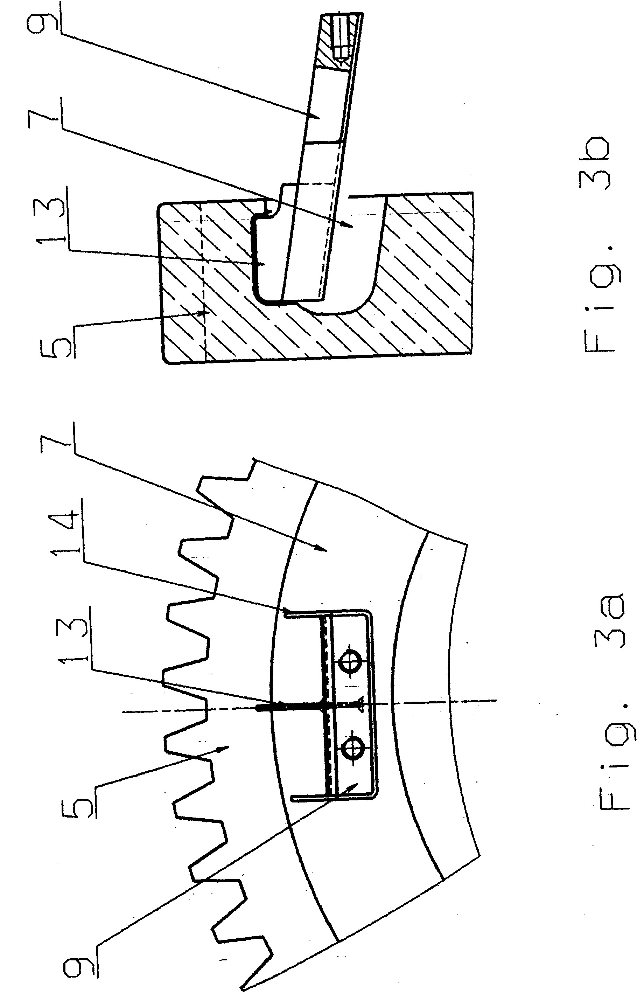

In Fig. 3a und 3b ist der Ölabstreifer 9 im Detail in Vorder- und Seitenansicht dargestellt. Der Ölabstreifer 9 ist in diesem Ausführungsbeispiel symmetrisch angeordnet, um eine Funktion für beide Drehrichtungen des Großrades 4 bzw. des Elektromotors zu ermöglichen. Die Abscheidewand 13 des Ölabstreifers 9 ist in geringem Abstand von der Innenwand der Nut 7 im Großrad 5 angeordnet. Das Auffanggefäß 14 des Ölabstreifers 9 ist wannenförmig ausgebildet. Durch die Abscheidewand 13 wird das in der Nut 7 mitgerissene Öl abgestreift und im Auffanggefäß 14 gesammelt und weitergeleitet.

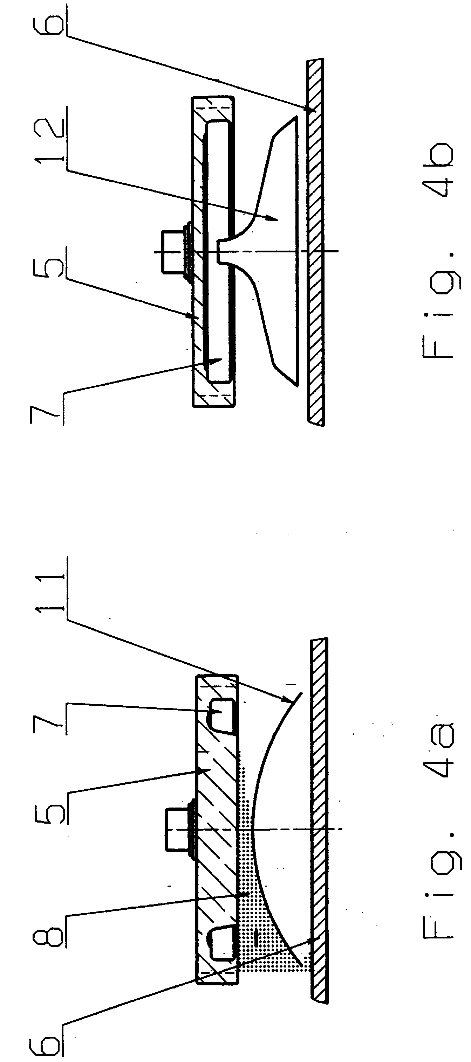

In Fig. 4a und 4b sind verschiedene Leitbauteile im Detail in der Ansicht von oben wiedergegeben. Fig. 4a zeigt ein Ausführungsbeispiel eines Leitbauteils 11 zur Anhebung des Niveaus des Öls 8 im Getriebekasten 6. Das Leitblech 11 ist zum Großrad 5 hin gebogen ausgeführt, wodurch bei Drehung des Großrades 5 gegen den Uhrzeigersinn das am Boden des Getriebekastens 6 befindliche Getriebeöl 8 in die Enge zwischen Leitblech 11 und Großrad 5 in Richtung des Pfeiles befördert wird und aufgrund der Querschnittsverringerung das Niveau des Ölsumpfs steigt. Dadurch kann mehr Getriebeöl in die Nut 7 gelangen. Fig. 4b zeigt einen anderen Leitbauteil 12, welches dazu dient, Spritzöl einzufangen und in die Nut 7 des Großrades 5 zu führen. Besonders bei hohen Drehzahlen des Großrades 5 tritt ein Spritzen des Öls auf. Durch eine trichterförmige Ausbildung dieses Leitbauteils 12 kann ein Teil des Spritzöls gesammelt werden. Der Leitbauteil 12 läuft nach unten zusammen und mündet an der tiefsten Stelle der Nut 7 im Großrad 5 wodurch das gesammelte Öl in die Nut 7 fließen kann.

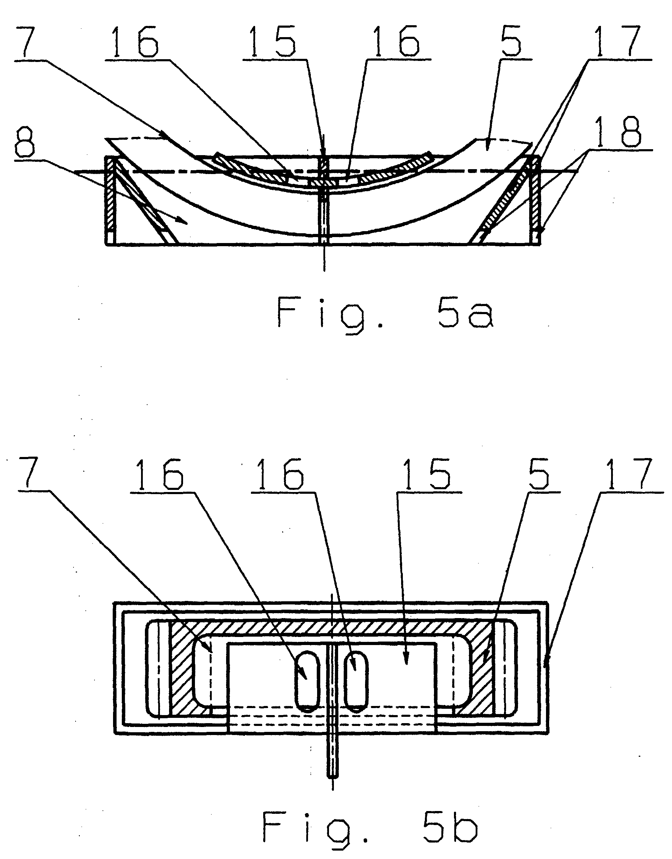

Fig. 5a und 5b zeigen den erfindungsgemäßen Luftabscheider und weitere Leitbauteile im Detail in Seitenansicht und Schnittdarstellung von oben. Der Luftabscheider 15 ist an der tiefsten Stelle der ringförmigen Nut 7 des Großrades 5 angeordnet und ragt in die Nut 7 hinein und ist über einen bestimmten Winkelbereich in gleichen Abstand zur Innenwand der Ringnut 7 angeordnet. Zum Zweck der Abführung der Luft sind in dem Luftabscheider 15 Löcher 16 angeordnet. Je nach Drehrichtung wird über das erste Loch die Luft abgeschieden und über das andere Loch das Öl durch den entstehenden Unterdruck angesaugt. Die Leitbauteile 17 mit den horizontalen Bohrungen 18 für einen Druckausgleich im Getriebeölsumpf des Getriebekastens dienen zur Erhöhung der Schmierwirkung der Verzahnung des Großrades 5.

## Patentansprüche

1. Einrichtung zur Förderung des Getriebeöls zur Kühlung elektrischer Maschinen mit einem in einem Getriebekasten (6) angeordneten Großrad (5), dadurch gekennzeichnet, daß das Großrad (5) an mindestens einer Seite eine ringförmige Nut (7) aufweist, und daß die ringförmige Nut (7) an ihrem tiefsten Punkt unter dem Niveau des Getriebeölsumpfs (8) im Getriebekasten (6) liegt, und daß ein Ölabstreifer (9) mit einer Abscheidewand (13) berührungslos in die Nut (7) hineinragt und der Ölabstreifer (9) ein Auffanggefäß (14) beinhaltet, welches vom Großrad (5) weg schräg zur Horizontalen abfallend angeordnet ist.

2. Einrichtung gemäß Anspruch 1, dadurch gekennzeichnet, daß der Ölabstreifer (9) an der höchsten Stelle der ringförmigen Nut (7) in diese hineinragt.

3. Einrichtung nach Anspruch 1 oder 2, dadurch gekennzeichnet, daß das Auffanggefäß (14) wannenförmig, V-förmig oder schalenförmig ausgebildet ist.

4. Einrichtung nach einem der vorangegangenen Ansprüche, dadurch gekennzeichnet, daß an der bzw. den Seite(n) der ringförmigen Nut (7) des Großrades (5) an der tiefsten Stelle der Nut (7) ein Leitbauteil (11) zum Großrad (5) hin gebogen angeordnet ist.

5. Einrichtung nach einem der vorangegangenen Ansprüche, dadurch gekennzeichnet, daß an der bzw. den Seite(n) der ringförmigen Nut (7) des Großrades (5) ein trichterförmiger Leitbauteil (11) mit einer im tiefsten Bereich der ringförmigen Nut (7) mündenden Ausformung angeordnet ist.

6. Einrichtung nach einem der vorangegangenen Ansprüche, dadurch gekennzeichnet, daß an der bzw. den Seite(n) der ringförmigen Nut (7) des Großrades um die tiefste Stelle der Nut (7) ein Luftabscheider (15) angeordnet ist, der über einen gewissen Winkelbereich konzentrisch zur Nut (9) angeordnet ist und Löcher (16) zu beiden Seiten des tiefsten Punkts aufweist.

7. Einrichtung nach einem der vorangegangenen Ansprüche, dadurch gekennzeichnet, daß im Getriebeölsumpf (8) des Getriebekasten (6) Leitbauteile (17) angeordnet sind, welche am Boden des Getriebekastens im wesentlichen horizontale Löcher (18) aufweisen.

8. Einrichtung nach einem der vorangegangenen Ansprüche, dadurch gekennzeichnet, daß die Leitbauteile (11, 12, 17) und/oder der Luftabscheider (15) mit dem Getriebekasten (6) in einem Stück gegossen werden.

9. Einrichtung nach einem der vorangegangenen Ansprüche, dadurch gekennzeichnet, daß der Ölabstreifer (9) und die Leitbauteile (11) symmetrisch in Bezug auf die Drehrichtung des Großrades (5) bzw. der elektrischen Maschine ausgeführt sind.

10. Einrichtung nach einem der vorangegangenen Ansprüchen, dadurch gekennzeichnet, daß die elektrische Maschine ein Traktionsmotor ist.

## Claims

1. A device for conveying the gear oil for cooling electric machines comprising a wheel (5) arranged in a gear casing (6), characterized in that the wheel (5) comprises an annular groove (7) on at least one side and that the annular groove (7) on its lowermost point is located below the level of the gear oil sump (8) within the gear casing (6), and that an oil stripper (9) including a separating wall (13) projects into the groove (7) in a contactless manner and the oil stripper (9) includes a collecting vessel (14) arranged in a manner obliquely inclined from the wheel (5) towards the horizontal.

2. A device according to claim 1, characterized in that the oil stripper (9) projects into the annular groove (7) on the highest point of the same.

3. A device according to claim 1 or 2, characterized in that the collecting vessel (4) is designed to be trough-shaped, V-shaped or cup-shaped.

4. A device according to any one of the preceding claims, characterized in that a guiding element (11) is arranged on the side(s) of the annular groove (7) of the wheel (5) on the lowermost point of the groove (7) in a manner curved towards the wheel (5).

5. A device according to any one of the preceding claims, characterized in that a a funnel-shaped guiding element (11) including a formation opening in the lowermost region of the annular groove (7) is arranged on the side(s) of the annular groove (7) of the wheel (5).

6. A device according to any one of the preceding claims, characterized in that an air separator (15) is arranged on the side(s) of the annular groove (7) of the wheel around the lowermost point of the groove (7), which air separator is arranged concentrical with the groove (7) over a defined angular region and includes holes (16) on both sides of the lowermost point.

7. A device according to any one of the preceding claims, characterized in that guiding elements (17) including substantially horizontal holes (18) on the bottom of the gear casing are arranged in the gear oil sump (8) of the gear casing (6).

8. A device according to any one of the preceding claims, characterized in that the guiding elements (11, 12, 17) and/or the air separator (15) are cast in one piece with the gear casing (6).

9. A device according to any one of the preceding claims, characterized in that the oil stripper (9) and the guiding elements (11) are designed to be symmtrical with respect to the direction of rotation of the wheel (5) or the electric machine, respectively.

10. A device according to any one of the preceding claims, characterized in that the electric machine is a traction engine.

## Revendications

1. Dispositif de transport de l'huile à engrenages pour refroidir des machines électriques comportant une roue (5) aménagée dans une boîte d'engrenage (6), caractérisé en ce que la roue (5) comprend une rainure annulaire (7) d'au moins un côté et en ce que la rainure annulaire (7), à son point le plus bas, se trouve sous le niveau de la boue d'huile à engrenages (8) dans la boîte d'engrenage (6), et en ce qu'un racleur d'huile (9) comprenant une parois de séparation (13) passe dans ladite rainure (7) sans contact et le racleur d'huile (9) inclut un récipient de réception (14) qui est aménagé de façon obliquement inclinée à partir de la roue (5) vers l'horizontale.

2. Dispositif selon la revendication 1, caractérisé en ce que le racleur d'huile (9) passe dans la rainure annulaire (7) au point le plus haut de celle-ci.

3. Dispositif selon la revendication 1 ou 2, caractérisé en ce que le récipient de réception (14) a une forme en cuve, en V ou en cuvette.

4. Dispositif selon l'une des revendications précédentes, caractérisé en ce qu'un élément de guidage (11) est aménagé du côté (des côtés) de la rainure annulaire (7) de la roue (5), au point le plus bas de la rainure (7), de façon courbée vers la roue (5).

5. Dispositif selon l'une des revendications précédentes, caractérisé en ce que, du côté (des côtés) de la rainure annulaire (7) de la roue (5), est prévu un élément de guidage en entonnoir (11) ayant une formation débouchant dans la région la plus basse de la rainure (7).

6. Dispositif selon l'une des revendications précédentes, caractérisé en ce qu'un séparateur d'air (15) est prévu du côté (des côtés) de la rainure annulaire (7) de la roue autour du point le plus bas de la rainure (7), lequel séparateur d'air est aménagé concentriquement à la rainure (7) sur une certaine plage angulaire et a des orifices (16) de part et d'autre du point le plus bas.

7. Dispositif selon l'une des revendications précédentes, caractérisé en ce que des éléments de guidage (17) sont aménagés dans la boue de l'huile à engrenages (8) de la boîte d'engrenage (6), lesquels éléments de guidage ont des orifices essentiellement horizontales (18) sur le fond de la boîte d'engrenage.

8. Dispositif selon l'une des revendications précédentes, caractérisé en ce que les éléments de guidage (11, 12, 17) et/ou le séparateur d'air (15) sont coulés en une seule pièce avec la boîte d'engrenage (6).

9. Dispositif selon l'une des revendications précédentes, caractérisé en ce que le racleur d'huile (9) et les éléments de guidage (11) sont réalisés symmetriquement par rapport à la direction de rotation de la roue (5) respectivement de la machine électrique.

10. Dispositif selon l'une des revendications précédentes, caractérisé en ce que la machine électrique est un moteur de traction.
